# EUROPÄISCHE PATENTANMELDUNG

(11) **EP 1 205 864 A1**
(43) Veröffentlichungstag der Anmeldung: **15.05.2002**
(21) Anmeldenummer: 00890339.5
(22) Anmeldetag: 14.11.2000
(51) Int. Cl.: G06F 17/60

(54) **Verfahren und Anlage zur Steuerung der Kommunikation zwischen Vertragspartnern**

(71) Anmelder: Pesch, Peter, 1230 Wien (AT)
(72) Erfinder: Pesch, Peter, 1230 Wien (AT)

(57) **Zusammenfassung**

Die Erfindung betrifft ein Verfahren zur Steuerung der Kommunikation zwischen zumindest einem ersten Vertragspartner (A) und potentiellen zweiten Vertragspartnern (Bᵢ) auf Grundlage von Drittinformation (1) eines Vermittlers (V), wobei die Drittinformation (1) zumindest die Identität (2) des ersten Vertragspartners und eine Beschreibung (3) des Vertragsgegenstandes umfaßt, mit den Schritten:
(a) Empfangen einer Drittinformation (1) und Speichern derselben,
(b) Zurverfügungstellen des Zuganges zur Vertragsgegenstandsbeschreibung (3) der Drittinformation (1) für eine Abfrage durch zweite Vertragspartner (Bᵢ),
(c) Empfangen von Geboten (19) von zweiten Vertragspartnern (Bᵢ) für den Zugang zur Vertragspartneridentität (2) der Drittinformation (1), wobei jedes Gebot (19) zumindest die Angabe (24) einer Abschlußgebühr (P) umfaßt, Empfangen einer Gebotsgebühr (C) für jedes Gebot (19) von jedem gebotsabgebenden zweiten Vertragspartner (Bᵢ), und Speichern der Gebote (19) und Gebotsgebühren (C),
(d) Ermitteln der Gebote (19) mit den N höchsten Angaben (24) von Abschlußgebühren (P) zu einem vorgegebenen Zeitpunkt (t), wobei N ≥ 1 ist, Senden der Vertragspartneridentität (2) der Drittinformation (1) an die die N Gebote abgebenden zweiten Vertragspartner (Bᵢ), und Senden zumindest eines Anteiles (qΣC) aller Gebotsgebühren (C) an den Vermittler (V).

## Beschreibung

Die vorliegende Erfindung betrifft ein Verfahren und eine Anlage zur Steuerung der Kommunikation zwischen einem ersten Vertragspartner und potentiellen zweiten Vertragspartnern, sowie ein entsprechendes Computerprogrammprodukt.

Es gibt eine Vielzahl von Systemen zur Steuerung der Kommunikation zwischen potentiellen Vertragspartnern, z.B. Werbemedien, Anzeigemedien, elektronische Anschlagetafeln, usw. Es sind jedoch noch keine Systeme zur automatischen Herstellung bzw. Anbahnung von Geschäftskontakten für Vertragsabschlüsse bekannt.

Die Erfindung setzt sich zum Ziel, erstmals ein solches System zu schaffen, mit welchem die Transaktionskosten pro Kommunikationskontakt mit einem potentiellen Vertragspartner geringer sind als mit herkömmlichen Werbe- und Informationsmedien.

Dieses Ziel wird in einem ersten Aspekt erreicht mit einem Verfahren zur Steuerung der Kommunikation zwischen zumindest einem ersten Vertragspartner und potentiellen zweiten Vertragspartnern auf Grundlage von Drittinformation eines Vermittlers, wobei die Drittinformation zumindest die Identität des ersten Vertragspartners und eine Beschreibung des Vertragsgegenstandes umfaßt, mit den Schritten:
(a) Empfangen einer Drittinformation und Speichern derselben,
(b) Zurverfügungstellen des Zuganges zur Vertragsgegenstandsbeschreibung der Drittinformation für eine Abfrage durch zweite Vertragspartner,
(c) Empfangen von Geboten von zweiten Vertragspartnern für den Zugang zur Vertragspartneridentität der Drittinformation, wobei jedes Gebot zumindest die Angabe einer Abschlußgebühr umfaßt, die vom jeweiligen zweiten Vertragspartner für einen Vertragsabschluß mit dem ersten Vertragspartner geboten wird, Empfangen einer Gebotsgebühr für jedes Gebot von jedem gebotsabgebenden zweiten Vertragspartner, und Speichern der Gebote und Gebotsgebühren, und
(d) Ermitteln der Gebote mit den N höchsten Angaben von Abschlußgebühren zu einem vorgegebenen Zeitpunkt, wobei N ≥ 1 ist, Senden der Vertragspartneridentität der Drittinformation an die die N Gebote abgebenden zweiten Vertragspartner, und Senden zumindest eines Anteiles aller Gebotsgebühren an den Vermittler.
   Die Erfindung beruht auf der neuartigen Verwendung von potentiell vertragsabschlußrelevanten Drittinformationen am Vertragsabschluß selbst nicht beteiligter Dritter zur automatischen Steuerung der Kommunikation und damit Anregung des weiteren Kommunikationsverhaltens zwischen den potentiellen Vertragspartnern. Die Drittinformation wird in einen sogenannten "privaten" Teil, welcher die für eine direkte Kommunikation zwischen dem ersten Vertragspartner und einem zweiten Vertragspartner erforderliche Identität des ersten Vertragspartners enthält, und einen sogenannten "öffentlichen" Teil zerlegt, der in der Art eines Werbevorspannes ("Teasers") das Interesse potentieller zweiter Vertragspartner an der Offenbarung des privaten Teils der Drittinformation wecken soll.
   Gemäß der Erfindung wird unter den interessierten potentiellen zweiten Vertragspartnern eine Auktion um die Offenbarung des privaten Teils der Drittinformation durchgeführt; die Sieger der Auktion, welche durchaus mehrere sein können (N=2,3..), erhalten die gesamte Drittinformation offenbart. Der Parameter der Auktion, um den gesteigert wird, ist jedoch nicht etwa der Preis für die Drittinformation selbst, sondern eine Abschlußgebühr, die nur dann zum Tragen kommt, wenn tatsächlich ein Vertragsabschluß stattfindet.
   Die Auktion wird daher um einen "fiktiven" Wert durchgeführt. Es ist das Verdienst der Erfindung, erkannt zu haben, daß die Auktion dennoch wirksam durchgeführt werden kann. Wird für die Gebotgebühr ein in der Praxis geringer Betrag angesetzt, kann dabei gleichzeitig hohe Benutzerakzeptanz erreicht werden.
   Die erfindungsgemäße Aufteilung in Gebotsgebühr zur Auktionsteilnahme und Abschlußgebühr als auktionsentscheidender Parameter gewährleistet eine praxisnahe, realistische Auktion bei gleichzeitig niedriger Überwindungsschwelle zur Teilnahme. Andererseits gewährleistet das Einheben der Gebotsgebühr und ihre Ausschüttung an den die Drittinformation einspeisenden Vermittler in der Praxis auch einen hervorragenden Anreiz zur Einspeisung von Drittinformationen in das System.
   In einer zweckmäßigen Ausführungsform der Erfindung kann der aktuelle Stand der Auktion, insbesondere der jeweils N höchsten gebotenen Abschlußgebühren, für alle potentiellen zweiten Vertragspartner zur Abfrage zur Verfügung gestellt werden, so daß diese bis zu dem vorgegebenen Zeitpunkt weitere Gebote abgeben können. Die Kosten zur Herstellung des Geschäftskontaktes mit dem ersten Vertragspartner liegen somit in der Disposition eines jeden zweiten Vertragspartners und können entsprechend geringer als die für herkömmliche Werbekontakte erforderlichen Kosten gewählt werden.
   Eine besonders bevorzugte Ausführungsform des erfindungsgemäßen Verfahrens zeichnet sich aus durch die weiteren Schritte:
(e) Empfangen von Bewertungsinformationen zu der Drittinformation innerhalb einer vorgegebenen Zeitspanne, und,
(f1) wenn eine der Bewertungsinformationen einen Vertragsabschluß zwischen dem ersten Vertragspartner und einem der zweiten Vertragspartner anzeigt, Empfangen der in dem Gebot dieses zweiten Vertragspartners angegebenen Abschlußgebühr und Senden zumindest eines Anteils daran an den Vermittler, oder,
(f2) wenn keine der Bewertungsinformationen einen Vertragsabschluß anzeigt, jedoch Bewertungsinformationen von einer Mehrheit der die N Gebote abgegeben habenden zweiten Vertragspartnern empfangen werden, Wiedererhalten der an den Vermittler gesendeten Gebotsgebühren und Zurücksenden derselben an die zweiten Vertragspartner.

Auf diese Weise kann die Benutzerakzeptanz des Systems noch wesentlich gesteigert werden. Bewertungsinformationen können von beliebiger Seite eingespeist werden, z.B. vom Vermittler, dem vertragsabschließenden zweiten Vertragspartner, den übrigen N-1 potentiellen zweiten Vertragspartnern, welche die Auktion gewonnen hatten, jedoch kein Vertragsabschluß erreicht hatten, oder sogar vom ersten Vertragspartner selbst. Wenn irgendeine dieser Bewertungsinformationen einen erfolgten Vertragsabschluß anzeigt, belegt dies die Richtigkeit der Drittinformation und die in der Auktion angebotene Abschlußgebühr wird eingehoben.

Zweckmäßigerweise wird ein Großteil der eingehobenen Abschlußgebühr an den Vermittler weitergesandt, um den Anreiz für das Einspeisen von Drittinformation zu verstärken.

Andererseits verhindert das erfindungsgemäße Auswertungsverfahren für die Bewertungsinformationen auch das mißbräuchliche Einspeisen offensichtlich unrichtiger Drittinformationen. In diesem Fall ist mit einer Mehrzahl von Bewertungsinformationen der N potentiellen zweiten Vertragspartner, welche die Drittinformation erhalten hatten, zu rechnen. Solche Bewertungsinformationen werden als "Beschwerden" qualifiziert und veranlassen die Rückabwicklung des gesamten Gebotsgebührenflusses.

Das erfindungsgemäße Verfahren kann noch weiter verfeinert werden, wenn gemäß einer bevorzugten Ausführungsform nur die Gebote mit den M höchsten Angaben von Gebotsgebühren für die Ermittlung der genannten N Gebote zugelassen werden, wobei M > N ist. Dadurch wird eine zusätzliche Eintrittsschwelle für die Auktion geschaffen, d.h. tatsächlich ein zweistufiges Auktionsverfahren.

Bevorzugt ist es auch möglich, daß nur jene Gebote für die Ermittlung der genannten N Gebote herangezogen werden, deren Gebotsgebühr einen vorgegebenen Schwellwert übersteigt. Auf diese Weise wird eine einheitliche Eintrittsschwelle für die Auktion vorgegeben bzw. verlangt, was besonders bei jenen Verfahrensvarianten von Vorteil ist, bei welchen die Gebotsgebühr für jeden mitbietenden zweiten Vertragspartner unterschiedlich ist bzw. gar von diesem selbst vorgegeben wird.

Bevorzugt wird für jeden Vermittler eine Statistik über seine Drittinformationen und/oder die Bewertungsinformationen zu allen seinen Drittinformationen geführt und aktualisiert. Dadurch können beispielsweise Vermittler mit ungünstigen Bewertungsstatistiken von der weiteren Einspeisung ausgeschlossen werden, oder solchen mit günstigen Statistiken der Zugang besonders erleichtert werden. Eine bevorzugte Variante des erfindungsgemäßen Verfahrens besteht dabei darin, daß der genannte Anteil an den Gebotsgebühren und/oder der genannte Anteil an der Abschlußgebühr abhängig von dieser Statistik bestimmt wird. Vermittler, die viele Drittinformationen einspeisen, von welchen wiederum viele zu Vertragsabschlüssen führen und zu welchen wenige "beschwerende" Bewertungsinformationen einlangen, können auf diese Weise begünstigt werden.

Besonders vorteilhaft ist es auch, wenn für jeden gebotsabgebenden zweiten Vertragspartner eine Statistik über seine Gebote und/oder seine Bewertungsinformationen geführt und aktualisiert wird, so daß Vertragspartner mit günstiger Statistik bevorzugt behandelt werden können. Auch hier ist es besonders vorteilhaft, wenn gemäß der Erfindung vorgesehen wird, daß die Gebotsgebühr anhand dieser Statistik bestimmt, zusammen mit der Vertragsgegenstandsbeschreibung zur Verfügung gestellt und bei einem Gebot dieses zweiten Vertragspartners empfangen wird. Die für ein Gebot für eine bestimmte Drittinformation verrechnete Gebotsgebühr kann dadurch individuell an den jeweiligen Gebotsabgeber angepaßt werden.

Grundsätzlich gibt es verschiedene Arten zur Festlegung der Gebotsgebühr. Einerseits kann sie wie oben erörtert vorgegeben werden, insbesondere individuell für jeden zweiten Vertragspartner. Dabei kann die Gebotsgebühr auch abhängig von einer Klassifizierung des zweiten Vertragspartner bestimmt werden. Dadurch ist es möglich, die Gebotsgebühr z. B. nach Branchenzugehörigkeit des individuellen zweiten Vertragspartners oder seiner Nutzungsart (z.B. gewerblich/privat) zu differenzieren.

Alternativ wird bevorzugt im Schritt (c) eine Angabe über die Höhe der Gebotsgebühr vom zweiten Vertragspartner empfangen. Hier bestimmen somit die zweiten Vertragspartner selbst die von ihnen geleistete Gebotsgebühr, was besonders vorteilhaft im Zusammenhang mit dem oben erörterten zweistufigen Auktionsverfahren ist.

Eine bevorzuge Variante des erfindungsgemäßen Verfahrens zeichnet sich dadurch aus, daß die genannten Zahl N zusammen mit der Vertragsgegenstandsbeschreibung zur Abfrage zur Verfügung gestellt wird. Dadurch können die potentiellen zweiten Vertragspartner den Wert der Drittinformation und ihre Auktionsteilnahme besser abschätzen, da eine Drittinformation um so wertvoller ist, je weniger anderen potentiellen zweiten Vertragspartnern sie offenbart wird.

Aus demselben Grund ist es auch besonders günstig, wenn die Drittinformation eine Angabe über die Informationsqualität, bevorzugt ihren Ursprung, enthält, welche zusammen mit der Vertragsgegenstandsbeschreibung zur Abfrage zur Verfügung gestellt wird. Eine solche Angabe über die Informationsqualität, insbesondere ihren Ursprung kann beispielsweise in der Angabe bestehen, ob
(a) der Vermittler selbst der erste Vertragspartner ist (=höchste Qualität der Drittinformation; diese ist hier eigentlich eine Information aus erster Hand, eine "Erstinformation"; der Begriff "Drittinformation" wird hier jedoch auch auf diese Art von Informationen erstreckt),
(b) der Vermittler Einfluß auf die Vertragsabschlußentscheidung des ersten Vertragspartners hat,
(c) der Vermittler lediglich Einblick in die Vertragsabschlußentscheidung des ersten Vertragspartners hat,
(d) der Vermittler vom potentiellen Vertragsabschlußwunsch des ersten Vertragspartners von diesem oder
(e) nur wieder von einem Dritten (Hörensagen) gehört hat (=niedrigste Qualitätsstufe der Information).

In jedem Fall ist es besonders günstig, wenn gemäß einem weiteren Merkmal der Erfindung die Vertragsgegenstandsbeschreibung der Drittinformation beim Speichern nach vorgegebenen Klassen von Vertragsgegenständen klassifiziert wird, bevorzugt mit Hilfe eines Expertensystems, welches den Vermittler führt. Alternativ könnte eine solche Klassifikation erst bei der Abfrage durchgeführt werden.

Dabei kann bevorzugt die Gebotsgebühr auch abhängig von der genannten Klasse der Vertragsgegenstandsbeschreibung bestimmt werden, und zwar alternativ oder zusätzlich zu den oben genannten Möglichkeiten der Bestimmung der Gebotsgebühr. Die Gebotsgebühr kann daher z.B. nach Branchen- oder Wertkategorien gestaffelt werden; so wird beispielsweise die Gebotsgebühr für den Zugang zur Identität eines Vertragspartners, der ein hochpreisiges Baufahrzeug benötigt, höher sein als hinsichtlich eines Bedarfes nach einem kurzlebigen Konsumgut.

Eine weitere vorteilhafte Ausführungsform des erfindungsgemäßen Verfahrens zeichnet sich dadurch aus, daß der Zugang zur Vertragsgegenstandbeschreibung für einen bestimmten zweiten Vertragspartner nur abhängig von einer Klassifizierung dieses zweiten Vertragspartners zugelassen wird. Alternativ oder zusätzlich kann das Empfangen von Geboten eines bestimmten zweiten Vertragspartners nur abhängig von einer Klassifizierung dieses zweiten Vertragspartners zugelassen werden. Beide Maßnahmen ermöglichen ein Blockieren von unerwünschten Geboten.

Ein weiterer Aspekt der Erfindung besteht in der Schaffung einer Anlage zur Steuerung der Kommunikation zwischen zumindest einem ersten Vertragspartner und potentiellen zweiten Vertragspartnern auf Grundlage von Drittinformation eines Vermittlers, wobei die Drittinformation zumindest die Identität des ersten Vertragspartners und eine Beschreibung des Vertragsgegenstandes umfaßt, mit:
einer ersten Datenbank mit einer Einspeiseschnittstelle für den Vermittler zur Aufnahme von Drittinformation, wobei die erste Datenbank einen privaten Abschnitt und einen öffentlichen Abschnitt aufweist und im privaten Abschnitt zumindest die Identität des ersten Vertragspartners und im öffentlichen Abschnitt zumindest die Beschreibung des Vertragsgegenstandes speichert, und ferner mit einer Abfrageschnittstelle zur Abfrage des öffentlichen Abschnittes durch potentielle zweite Vertragspartner,
einer Kontoführungsvorrichtung zur Führung von Guthabenkonten für jeden eine Drittinformation einspeisenden Vermittler,
einer zweiten Datenbank mit einer Einspeiseschnittstelle für die zweiten Vertragspartner zur Aufnahme von Geboten für den Zugang zum privaten Abschnitt der ersten Datenbank hinsichtlich einer bestimmten Drittinformation, wobei jedes Gebot zumindest die Angabe einer Abschlußgebühr enthält, die vom jeweiligen zweiten Vertragspartner für einen Vertragsabschluß mit dem ersten Vertragspartner geboten wird, und wobei jedem Gebot eine vorgebbare Gebotsgebühr zugeordnet ist,
einer Kontoführungsvorrichtung zur Führung von Guthabenkonten für jeden ein Gebot einspeisenden zweiten Vertragspartner,
einem Sammelspeicher zur Sammlung von Gebotsgebühren, wobei jedes Einspeisen eines Gebotes in die zweite Datenbank den Transfer der zugeordneten Gebotsgebühr vom Guthabenkonto des einspeisenden zweiten Vertragspartners zum Sammelspeicher auslöst, und
einer Auktionsvorrichtung, die zu einem vorgegebenen Zeitpunkt die Gebote mit den N höchsten Angaben von Abschlußgebühren aus der zweiten Datenbank ermittelt, wobei N ≥ 1, für jeden eines dieser N Gebote eingespeist habenden zweiten Vertragspartner den Zugang zum privaten Abschnitt der ersten Datenbank für die von diesem Gebot betroffene Drittinformation freischaltet, und den Transfer eines vorgebbaren Anteils aller im Sammelspeicher gesammelter Gebotsgebühren zum Guthabenkonto des die betroffene Drittinformation eingespeist habenden Vermittlers auslöst.

Die erfindungsgemäße Anlage ermöglicht die automatische Durchführung des beschriebenen Verfahrens. Bezüglich der Funktionsweise und der Vorteile der Anlage wird daher auf die entsprechende Erörterung des Verfahrens verwiesen. Zweckmäßigerweise ist die erfindungsgemäße Anlage computergestützt.

Eine besonders bevorzugte Ausführungsform der erfindungsgemäßen Anlage zeichnet sich dadurch aus, daß eine Auswertevorrichtung mit zumindest einer Eingangsschnittstelle für den Empfang von Bewertungsinformationen vorgesehen ist, welche Auswertevorrichtung den Empfang von Bewertungsinformationen zu der Drittinformation innerhalb einer vorgegebenen Zeitspanne freigibt und, wenn eine der Bewertungsinformationen einen Vertragsabschluß zwischen dem ersten Vertragspartner und einem der zweiten Vertragspartner anzeigt, den Transfer zumindest eines Anteils der in dem Gebot dieses zweiten Vertragspartners angegebenen Abschlußgebühr von dessen Guthabenkonto auf das Guthabenkonto des Vermittlers auslöst, oder, wenn keine der Bewertungsinformationen einen Vertragsabschluß anzeigt, jedoch Bewertungsinformationen von einer Mehrheit der die N Gebote abgegeben habenden zweiten Vertragspartnern vorliegen, den Rücktransfer der Gebotsgebühren vom Guthabenkonto des Vermittlers auf die Guthabenkonten der zweiten Vertragspartner auslöst. Auf diese Weise wird die Sicherheit und Benutzerakzeptanz der Anlage noch wesentlich gesteigert, wie oben erläutert wurde.

Weitere Merkmale und Vorteile der erfindungsgemäßen Anlage ergeben sich aus den Unteransprüchen und der folgenden Beschreibung.

Die Erfindung schafft schließlich auch ein Computerprogrammprodukt, gegebenenfalls auf einem computerlesbaren Datenträger gespeichert, das ein Verfahren der offenbarten Art implementiert.

Die erfindungsgemäße Anlage kann sowohl mittels Hardware als auch Software realisiert werden; die Erfindung schafft demgemäß auch ein Computerprogrammprodukt, gegebenenfalls gespeichert auf einem computerlesbaren Datenträger, das eine Softwareimplementierung der offenbarten Anlage darstellt.

Die Erfindung wird nachstehend anhand von in den Zeichnungen dargestellten Ausführungsbeispielen näher erläutert. In den Zeichnungen zeigt Fig. 1 ein Blockschaltbild der Anlage der Erfindung, Fig. 2 schematisch den Aufbau eines Datensatzes in der ersten Datenbank für Drittinformationen, Fig. 3 schematisch den Aufbau eines Datensatzes in der zweiten Datenbank für Gebote, und Fig. 4 das Interaktions- und Sequenzdiagramm des Verfahrens der Erfindung.

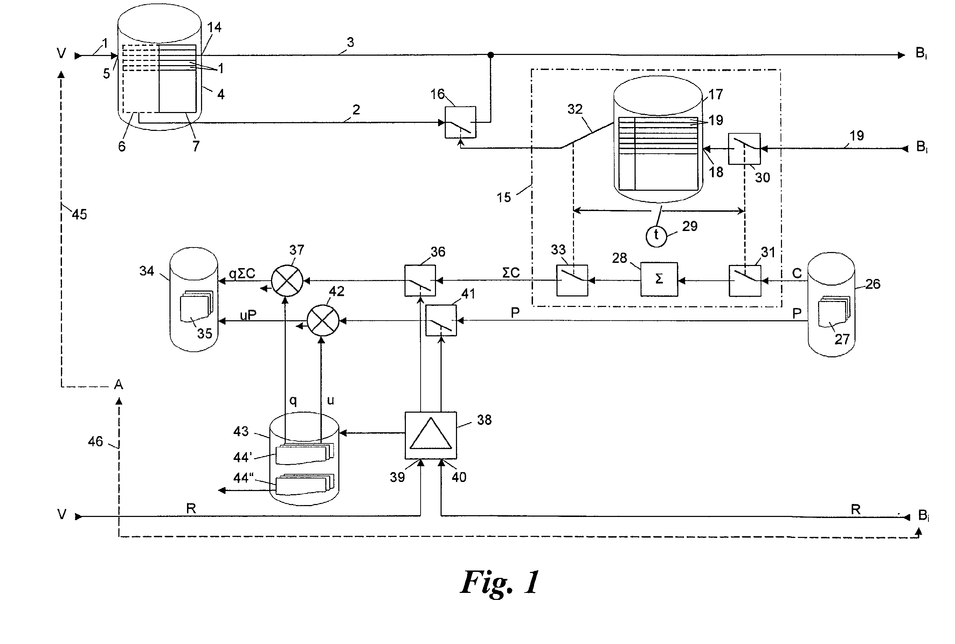

Fig. 1 zeigt eine Anlage zur Steuerung der Kommunikation zwischen einem ersten Vertragspartner A und mehreren potentiellen zweiten Vertragspartnern B₁, B₂, ..Bₙ, von denen ein Vertragspartner Bᵢ stellvertretend gezeigt ist. Die direkte Kommunikation zwischen dem ersten Vertragspartner A und einem zweiten Vertragspartner Bᵢ erfolgt außerhalb der Anlage von Fig. 1 (siehe Pfeil 46), jedoch angeregt und gesteuert durch die Anlage von Fig. 1, und zwar auf Grundlage einer Drittinformation 1, die ein Vermittler V in die Anlage einspeist.

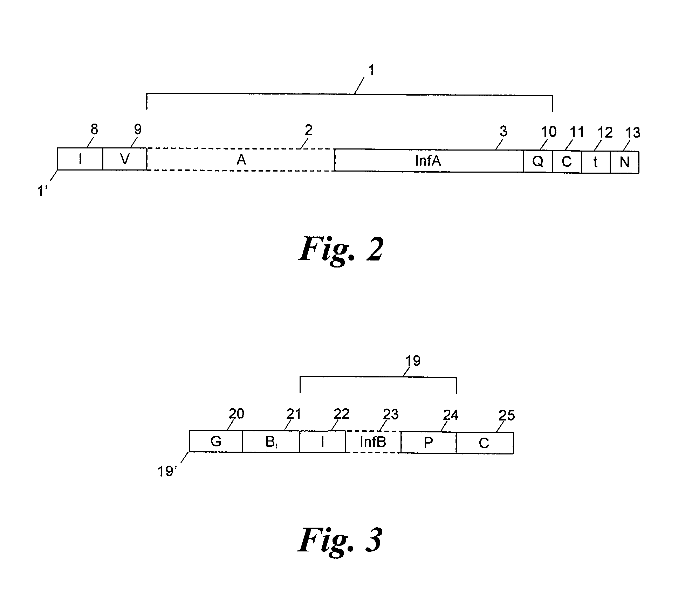

Die Drittinformation 1 umfaßt zumindest eine Angabe 2 über die Identität des Vertragspartners A und eine Beschreibung 3 des Vertragsgegenstandes, über welchen der Vertragspartner A einen Vertragsabschluß zu erreichen sucht (siehe Fig. 2). Die Drittinformation 1 gelangt vom Vertragspartner A direkt oder über Mittler oder Medien zum Vermittler V (siehe Pfeil 45). Im einfachsten Fall (nicht dargestellt) können der Vertragspartner A und der Vermittler V ein und dieselbe Person sein.

Der Vertragsgegenstand kann an sich beliebiger Art sein, z.B. ein Kauf, Verkauf, ein Werkvertrag, ein Dienstvertrag, ein Mietvertrag usw. Beispielsweise möchte A ein Auto kaufen/verkaufen, eine Wohnung mieten/vermieten, einen Arbeitsvertrag eingehen/vergeben, usw.

Gemäß Fig. 1 weist die Anlage eine erste Datenbank 4 zur Aufnahme der Drittinformationen 1 auf. Die erste Datenbank 4 ist mit einer Einspeiseschnittstelle 5 für den Vermittler V versehen. Die Einspeiseschnittstelle 5 kann auf beliebige in der Technik bekannte Art gestaltet sein, beispielsweise in Form eines Computerterminals, einer Server/Client-basierenden Internetlösung, so daß der Vermittler V über einen herkömmlichen Internetbrowser auf die Datenbank 4 zugreifen kann, in Form eines Sprachantwortmodules ("voice response unit", VRU) zwecks Zuganges über das öffentliche Telefonnetz, od. dgl.

Die erste Datenbank 4 ist in einen privaten Abschnitt 6 und einen öffentlichen Abschnitt 7 unterteilt, wobei im privaten Abschnitt 6 zumindest die Vertragspartneridentität 2 und im öffentlichen Abschnitt 7 zumindest die Vertragsgegenstandsbeschreibung 3 gespeichert wird. Tatsächlich werden zu jeder Drittinformation 1 in der Datenbank 4 noch weitere Informationen gespeichert, beispielsweise eine eindeutige Informationsidentifikation "I" 8 und eine Vermittlerkennung "V" 9 (siehe Fig. 2). Darüber hinaus kann der Vermittler V (oder der Betreiber der Anlage, falls gewünscht) zusätzlich eine Angabe 10 über die Qualität der Information einspeisen, welche im öffentlichen Abschnitt 7 gespeichert wird. Die Informationsqualitätsangabe 10 kann in Qualitätsstufen angegeben sein, beispielsweise den eingangs genannten Stufen (a) bis (e). Die Vertragsgegenstandsbeschreibung 3 kann auch quantitative Angaben über den gewünschten Vertragsabschluß enthalten, z.B. einen maximalen/minimalen Preis, Stückzahlen, Lieferzeiten, Dienstzeiten, usw. Darüber hinaus enthält der öffentliche Abschnitt 7 der ersten Datenbank 4 zur jeder Drittinformation 1 noch weitere Angaben 11 bis 13, deren Zweck später noch beschrieben wird.

Die erste Datenbank 4 ist mit einer Abfrageschnittstelle 14 zur Abfrage des öffentlichen Abschnittes 7, insbesondere der Vertragsgegenstandsbeschreibung 3, der Informationsqualitätsangabe 10 und der weiteren Angaben 11 bis 13, durch potentielle zweite Vertragspartner Bᵢ versehen.

Die Einspeiseschnittstelle 1, die erste Datenbank 4 und/oder die Abfrageschnittstelle 14 klassifizieren die eingespeisten Drittinformationen 1 bevorzugt nach vorgegebenen Klassen von möglichen Vertragsgegenständen, so daß die Vertragspartner Bᵢ die erste Datenbank 4 nach interessierenden Drittinformationen 1 einfacher durchsuchen können. Dabei kann ein Expertensystem verwendet werden, welches z.B. in der Einspeiseschnittstelle 1 oder in der Abfrageschnittstelle 14 entsprechende Fragen an den Vermittler V oder den Vertragspartner Bᵢ stellt und diesen führt.

Die Abfrageschnittstelle 14 kann auch so eingerichtet sein, daß sie eine Klassifizierung eines abfragenden Vertragspartners Bᵢ durchführt oder entgegennimmt, z.B. nach Branche oder Nutzerart (z.B. privat/gewerblich) klassifiziert usw. Abhängig von der Klassifizierung des zweiten Vertragspartners Bᵢ kann die Abfrageschnittstelle 14 die Abfrage von z.B. branchenfremden Drittinformationen oder von gewerblichen Drittinformationen für nichtgewerbliche Nutzer und umgekehrt blockieren.

Für einen Vertragspartner Bᵢ wird der Zugang zum privaten Abschnitt 6 der ersten Datenbank 4 nur dann freigegeben, wenn ein allgemein mit 15 bezeichnetes Auktionsmodul diesen Zugang freigibt, wie der vom Auktionsmodul 15 gesteuerte Schalter 16 versinnbildlicht.

Das Auktionsmodul 15 umfaßt eine zweite Datenbank 17, in welche zweite Vertragspartner Bᵢ über eine Einspeiseschnittstelle 18 Gebote 19 für den Zugang zum privaten Abschnitt 6 der ersten Datenbank 4 für eine bestimmte Drittinformation 1 einspeisen können. Ein möglicher Datensatzaufbau zur Speicherung eines Gebotes 19 ist in Fig. 3 gezeigt. Der Datensatz 19' für das Gebot 19 enthält eine eindeutige Gebotsidentifikation "G" 20, eine Kennung "Bᵢ" 21 des gebotsabgebenden potentiellen zweiten Vertragspartners Bᵢ, eine Referenz 22 auf die Informationsidentifikation "I", optional weitere Informationen "InfB" 23 des Vertragspartners Bᵢ, welche dem Vermittler V oder dem ersten Vertragspartner A bei Erhalten des Zuganges zum privaten Abschnitt 6 gesendet werden sollen, sowie eine Angabe 24 über eine gebotene Abschlußgebühr P als Wertparameter des Gebotes 19. Die Abschlußgebühr P wird vom Vertragspartner Bᵢ dem Vermittler V geboten, wenn es zu einem tatsächlichen Vertragsabschluß zwischen dem zweiten Vertragspartner Bᵢ und dem ersten Vertragspartner A kommt. Die Abschlußgebühr P kann sowohl in einer fixen Gebühr als auch in einem prozentuellen Anteil am Wert des Vertragsgegenstandes ("Provisionsprozentsatz") liegen, in einem Gegengeschäft, in Naturalien usw.

Jedem Gebot 19 ist ferner eine Gebotsgebühr "C" zugeordnet. Diese Gebotsgebühr C ist von jedem ein Gebot 19 abgebenden potentiellen zweiten Vertragspartner Bᵢ zunächst an den Betreiber der Anlage zu leisten. Zu diesem Zweck umfaßt die Anlage eine Kontoführungsvorrichtung 26 zur Führung von Guthabenkonten 27 für zumindest jeden ein Gebot abgebenden Vertragspartner Bᵢ. Dem Betreiber der Anlage ist ein Sammelspeicher 28 zur Sammlung von Gebotsgebühren C zugeordnet. Jedes Einspeisen eines Gebotes 19 in die zweite Datenbank 17 veranlaßt parallel einen Transfer der zugeordneten Gebotsgebühr C vom Guthabenkonto 27 des einspeisenden zweiten Vertragspartners B₁ zum Sammelspeicher 28.

Es versteht sich, daß der eigentliche Geldfluß von einem der zweiten Vertragspartner Bᵢ zum Anlagenbetreiber beliebig und auf vielerlei Arten gestaltet sein kann, beispielsweise mittels Banküberweisung, Kreditkartenbelastung, Telefonrechnung, "Cybercash", usw. Die Kontoführungsvorrichtung 26 und der Sammelspeicher 28 haben vor allem die Funktion, die Geldflüsse zu protokollieren und dem Vertragspartner Bᵢ und dem Anlagenbetreiber zuzuordnen.

Die Höhe der Gebotsgebühr C wird in der Praxis gering angesetzt, z.B. 0,5 EURO oder weniger. Jedes Gebot 19 kann einer einheitlichen Gebotsgebühr C unterliegen, oder die Gebotsgebühr C kann je nach Drittinformation 1, Vermittler V und/oder zweitem Vertragspartner Bᵢ variieren. In letzteren Fällen kann der Datensatz 19' zusätzlich eine Angabe 25 über die dem Gebot zugeordnete Gebotsgebühr C enthalten, und/oder der öffentliche Abschnitt 7 der ersten Datenbank 4 kann eine Angabe 11 über die Gebotsgebühr C enthalten, welche für ein Gebot für die Drittinformation 1 zu entrichten ist, und/oder die Abfrageschnittstelle 14 kann dynamisch anhand der Identität des Vertragspartners Bᵢ eine Gebotsgebühr C berechnen und anzeigen.

Die Höhe der Gebotsgebühr C kann grundsätzlich sowohl vom System vorgegeben als auch von einem bietenden zweiten Vertragspartner Bᵢ angegeben, d.h. über die Einspeiseschnittstelle 18 der zweiten Datenbank 17 im Rahmen eines Gebotes 19 empfangen werden. Im ersten Fall wird in der Praxis die Gebotsgebühr z.B. abhängig vom Wert und der voraussichtlichen Begehrtheit einer Drittinformation 1, der voraussichtlichen Anzahl der bietenden zweiten Vertragspartner Bᵢ, und/oder der geschätzten Anzahl aller in dieser Klasse oder Branche auf dem Markt befindlichen potentiellen zweiten Vertragspartner Bᵢ festgelegt, ergänzt durch Daten aus den Statistiken früherer Auktionen in dieser Klasse oder Branche. Davon ausgehend kann die Gebotsgebühr C dann nochmals anhand der individuellen Statistiken jedes Vertragspartners abgestuft werden. Im zweiten Fall ermöglicht die Angabe der Höhe der Gebotsgebühr C durch einen zweiten Vertragspartner Bᵢ wie beschrieben die Durchführung einer zweistufigen Auktion.

Das Einspeisen von Geboten 19 in die zweite Datenbank 17 ist nur innerhalb eines vorgegebenen Zeitfensters bzw. bis zu einem vorgegebenen Zeitpunkt t ("Annahmeschluß") möglich. Zu diesem Zweck ist im Auktionsmodul 15 eine Auktionsvorrichtung 29 schematisch dargestellt, welche zum vorgegebenen Zeitpunkt t das Einspeisen weiterer Gebote in die Datenbank 17 und das Einzahlen weiterer Gebotsgebühren C in den Sammelspeicher 28 unterbindet, versinnbildlicht durch Schalter 30, 31, und zu einer Auswertung der vorliegenden Gebote 19 übergeht, versinnbildlicht durch Schaltwähler 32. Dabei ermittelt die Auktionsvorrichtung 29 jene Gebote 19, welche die N höchsten Angaben 24 von Abschlußgebühren P enthalten, wobei N ≥ 1 ist. D. h., es kann mehr als einen "Gewinner" der Auktion geben.

Die Auktionsvorrichtung 29 kann so eingerichtet sein, daß sie bei der Ermittlung der N "gewinnenden" Gebote 19 überhaupt nur jene Gebote 19 berücksichtigt bzw. zuläßt, bei denen die Angabe 25 der Gebotsgebühr C einen vorgegebenen Schwellwert übersteigt, und/oder dieses Gebot zu den Geboten 19 mit den M höchsten Angaben 25 von Gebotsgebühren C gehört, wobei M > N ist.

Für diese "Gewinner"-Vertragspartner Bᵢ gibt die Auktionsvorrichtung 29 bzw. das Auktionsmodul 15 nun den Zugang zum privaten Abschnitt 6 der ersten Datenbank 4 frei und ermöglicht damit einem gewinnenden Vertragspartner B₁ den Zugang zumindest zur Vertragspartneridentität 2 der Drittinformation 1.

Gleichzeitig löst die Auktionsvorrichtung 29 den Transfer aller im Sammelspeicher 28 gesammelten Gebotsgebühren C zugunsten des Vermittlers V aus, welcher diese Drittinformation 1 eingespeist hatte, versinnbildlicht durch Schalter 33. Zu diesem Zweck ist die Anlage mit einer weiteren Kontoführungsvorrichtung 34 zur Führung von Guthabenkonten 35 zumindest für jeden eine Drittinformation einspeisenden Vermittler V ausgestattet, und der Transfer erfolgt vom Sammelspeicher 28 zum entsprechenden Guthabenkonto 35. Es versteht sich, daß die Kontoführungsvorrichtungen 26 und 34 auch eine gemeinsame Kontoführungsvorrichtung sein können.

Auch ist klar, daß der tatsächliche Geldfluß vom Einflußbereich des Anlagenbetreibers zum Einflußbereich des Vermittlers V auf beliebige Art erfolgen kann, beispielsweise auf alle oben genannten Arten, und die Kontoführungsvorrichtung 34 vor allem die Funktion einer Protokollierung der Geldflüsse hat.

Der Transfer der gesammelten Gebotsgebühren C vom Sammelspeicher 28 zum Guthabenkonto 35 des Vermittlers V kann einer weiteren Bedingung unterliegen, die durch einen optionalen Schalter 36 versinnbildlicht ist, dessen Zweck noch erläutert wird.

Tatsächlich wird nicht die gesamte Summe ΣC aller im Sammelspeicher gesammelter Gebotsgebühren C an das Guthabenkonto 35 des Vermittlers V gesendet, sondern nur ein vorgegebener Anteil qΣC. Zu diesem Zweck ist in den Transferweg vom Sammelspeicher 28 zur Kontoführungsvorrichtung 34 ein Anteilsrechner 37 eingeschaltet.

Der vorgegebene Anteil q ist bevorzugt ein Großteil der Gebotsgebührensumme ΣC; bevorzugt liegt q im Bereich von 0,7 bis 0,99, besonders bevorzugt um 0,8. Der verbleibende Betrag (1-q)ΣC verbleibt dem Betreiber der Anlage und wird auf ein entsprechendes (nicht dargestelltes) Sammelkonto weiterüberwiesen.

Der Annahmeschluß t für ein Gebot 19 sowie die Anzahl N der "Gewinner" der Auktion für eine bestimmte Drittinformation 1 können im öffentlichen Abschnitt 7 der ersten Datenbank 4 für die Vertragspartner Bᵢ zugänglich gemacht werden, siehe Felder 12 und 13 des Datensatzes 19'. Alternativ können diese Angaben in der Abfrageschnittstelle 14 generiert und der abgefragten Drittinformation 1 hinzugefügt werden.

Die Anlage von Fig. 1 weist auch eine Auswertevorrichtung 38 auf, welche eine erste Schnittstelle 39 für den Empfang einer Bewertungsinformation R vom Vermittler V und eine zweite Schnittstelle 40 für den Empfang von Bewertungsinformationen R von zweiten Vertragspartnern Bᵢ aufweist. Jede Bewertungsinformation R kann insbesondere folgende Werte einnehmen:
- (keine Bewertungsinformation).
- "Vertragsabschluß": Es ist zu einem Vertragsabschluß zwischen dem ersten Vertragspartner A und einem der zweiten Vertragspartner Bᵢ, welche die gesamte Drittinformation 1 offenbart erhalten hatten, gekommen.
- "Bewertung" und "von einem der Vertragspartner Bᵢ, welche die gesamte Drittinformation 1 offenbart erhalten hatten, stammend": Es handelt sich um eine Bewertung der Qualität der offenbarten Drittinformation 1.

Die Auswertevorrichtung 38 wertet innerhalb einer vorgebbaren Zeitspanne T nach dem vorgegebenen Zeitpunkt t alle einlangenden Bewertungsinformationen R aus und führt folgende Auswertelogik durch:
- Wenn auch nur eine einzige Bewertungsinformation R den Wert "Vertragsabschluß" hat, dann war die Drittinformation 1 authentisch und die Auswertevorrichtung 38 veranlaßt den Transfer der in dem Gebot 19 des zum Vertragsabschluß gekommenen Vertragspartners Bᵢ angegebenen Abschlußgebühr P zum Guthabenkonto 35 des Vermittlers V, wie durch den Schalter 41 versinnbildlicht. Es wird nicht die gesamte Abschlußgebühr P transferiert, sondern ein zwischengeschalteter Anteilsrechner 42 sendet einen Anteil uP zum Guthabenkonto 35. Der verbleibende Anteil (1-u)P wird auf ein (nicht gezeigtes) Sammelkonto des Betreibers der Anlage transferiert. Gleichzeitig mit der Freigabe des Transfers der Abschlußgebühr P gibt die Auswertevorrichtung 38 über den Schalter 36 auch den oben beschriebenen Transfer der Gebotsgebührensumme ΣC frei.
- Wenn keine der empfangenen Bewertungsinformationen R "Vertragsabschluß" anzeigt und keine Bewertungsinformation R von einem der Vertragspartner Bᵢ, welche die gesamte Drittinformation 1 offenbart erhalten hatten, empfangen wurde, dann kam offensichtlich zwar kein Vertragsabschluß zustande, die Drittinformation war jedoch offensichtlich authentisch. In diesem Fall veranlaßt die Auswertevorrichtung 38 zwar keinen Transfer einer Abschlußgebühr P, gibt jedoch den Transfer der Gebotsgebührensumme ΣC frei.
- Wenn keine der empfangenen Bewertungsinformationen R "Vertragsabschluß" anzeigt und eine Mehrheit jener N Vertragspartner Bᵢ, welche die gesamte Drittinformation 1 offenbart erhalten hatten, eine Bewertungsinformation R gesendet hat (oder zumindest eine solche Anzahl der N Vertragspartner Bᵢ, welche einen vorgegebenen Schwellwert übersteigt), wird angenommen, daß die Drittinformation 1 unrichtig war. In diesem Fall unterbindet die Auswertevorrichtung 38 den Transfer einer Abschlußgebühr P und unterbindet auch den Transfer der Gebotsgebührensumme ΣC. Zusätzlich kann die Auswertevorrichtung 38 den Rücktransfer der im Sammelspeicher 28 gespeicherten Gebotsgebührensumme ΣC auf die Guthabenkonten 27 jener Vertragspartner Bᵢ auslösen, welche ein Gebot 19 eingespeist hatten.

Es versteht sich, daß anstelle der gezeigten Unterbindung der Transfers mit Hilfe der Schalter 36 und 41 auch entsprechende Rücktransfers vorgesehen werden können. So kann beispielsweise der gesamte weiterzugebende Anteil qΣC der Gebotsgebührensumme ΣC sofort dem Guthabenkonto 35 des Vermittlers V gutgeschrieben werden, und erst nach Ablauf der Zeitspanne T kann die Auswertevorrichtung 38 einen entsprechenden Rücktransfer vom Guthabenkonto 35 zu den Guthabenkonten 27 der Vertragspartner Bᵢ vornehmen. Es ist klar, daß die Schalter 36, 40 hier auch als Sinnbilder für eine solche äquivalente Vorgangsweise stehen.

An die Auswertevorrichtung 38 ist ferner eine Datenbank 43 angeschlossen. Die Datenbank 43 führt und aktualisiert eine Statistik 44' für jeden Vermittler V hinsichtlich aller von ihm eingespeisten Drittinformationen 1 und/oder die zu seinen Drittinformationen 1 empfangenen Bewertungsinformationen R; sowie eine Statistik 44" für jeden Vertragspartner Bᵢ, der ein Gebot 19 abgegeben hat, hinsichtlich aller seiner Gebote 19 und/oder seiner Bewertungsinformationen R.

Auf Grundlage der Statistik 44' für einen Vermittler V steuert die Statistikdatenbank 43 den Anteilsfaktor q, welchen der Vermittler V von allen Gebotsgebühren ΣC erhält, und/oder jenen Anteilsfaktor u, welchen der Vermittler V von einer Abschlußgebühr P erhält. In gleicher Weise kann die Statistikdatenbank auf Grundlage der Statistik 44" für einen bestimmte Vertragspartner Bᵢ die Höhe der Gebotsgebühr C festlegen, die dieser Vertragspartner für ein Gebot 19 für eine bestimmte Drittinformation 1 zu leisten hat.

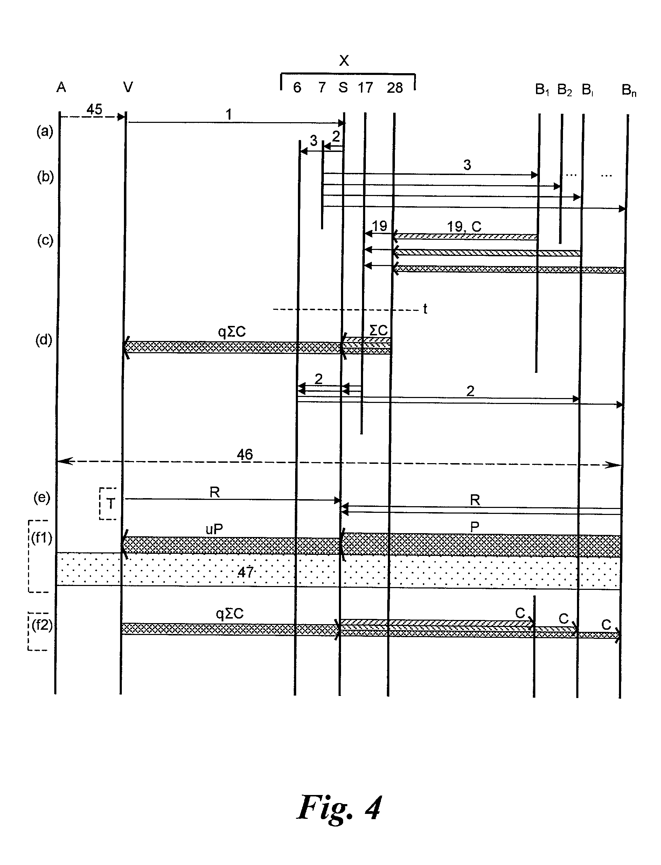

Anhand von Fig. 4 wird nun der Ablauf des erfindungsgemäßen Verfahrens erläutert.

In einem ersten, außerhalb des eigentlichen Verfahrens gelegenen Schritt 45 informiert der erste Vertragspartner A den Vermittler V über einen Vertragsabschlußwunsch. Der Vermittler V sendet in einem Schritt (a) diese Information als Drittinformation 1, umfassend zumindest die Vertragspartneridentität 2 und die Vertragsgegenstandsbeschreibung 3, an einen Ort S, z.B. den Ort der Anlage von Fig. 1 eines Anlagenbetreibers X. Die Drittinformation 1 ist oder wird bei der Speicherung in ihre Teile 2 und 3 zerlegt.

In einem Schritt (b) wird zweiten Vertragspartnern B₁, B₂, ..Bᵢ, ..Bₙ Zugang zur Vertragsgegenstandsbeschreibung 3 der Drittinformation 1 gewährt und diese fragen sie ab.

Im Schritt (c) werden von einigen Vertragspartnern B₁, Bᵢ und Bₙ Gebote 19 für den Zugang zur Vertragspartneridentität 2 der Drittinformation 1 empfangen, wobei jedes Gebot 19 gemäß Fig. 3 zumindest die Angabe einer Abschlußgebühr P umfaßt, die für einen Vertragsabschluß mit dem Vertragspartner A geboten wird, und von einer Gebotsgebühr C begleitet ist. Die Gebote 19 werden in der Datenbank 17 gespeichert, die Gebotsgebühren C im Sammelspeicher 28. Die Höhe der Gebotsgebühr C kann sowohl vom Sender als auch vom Empfänger festgelegt werden.

Es versteht sich, daß der Sammelspeicher 28 als Teil der Datenbank 17 ausgebildet sein kann; im einfachsten Fall (nicht dargestellt) bildet die bloße Auflistung der Gebote 19 in der zweiten Datenbank 17 den Sammelspeicher 28, da sich auch daraus jederzeit die Gebotsgebührensumme ΣC ermitteln läßt.

Zum vorgegebenen Zeitpunkt t werden im Schritt (d) die Gebote mit den N höchsten Angaben von Abschlußgebühren P ermittelt. In dem Beispiel von Fig. 4 ist N = 2. Dabei können auch nur jene Gebote Berücksichtigung finden, deren Gebotsgebühr C einen vorgegebenen Schwellwert übersteigt und/oder die zu den M Geboten mit den M höchsten Gebotsgebühren gehören, mit M > N.

An die diese N Gebote abgebenden Vertragspartner Bᵢ und Bₙ wird nun die Vertragspartneridentität 2 gesendet und offenbart. Gleichzeitig, davor oder danach wird ein Anteil qΣC der Gebotsgebührensumme ΣC an den Vermittler V gesandt; dies könnte alternativ auch zu einem wesentlich späteren Zeitpunkt erfolgen, beispielsweise nach Ablauf der Zeitspanne T des nachfolgenden Schrittes (e), oder akkumuliert zu festgelegten Zeitpunkten, usw.

In einem Schritt 46, welcher außerhalb des eigentlichen Verfahrens liegt, erfolgen Vertragsverhandlungen zwischen dem Vertragspartner A und den Vertragspartnern Bᵢ und Bₙ. In dem gezeigten Beispiel erhält Vertragspartner Bₙ den Zuschlag und der Vertragsabschluß erfolgt mit dem Vertragspartner Bₙ.

Im Schritt (e) werden innerhalb einer vorgegebenen Zeitspanne T nach dem Zeitpunkt t, beispielsweise einer Woche, einem Monat oder bevorzugt einem Jahr, Bewertungsinformationen R sowohl von Seiten des Vermittlers V als auch der zweiten Vertragspartner B₁, B₂, ..Bᵢ, ..Bₙ empfangen, gegebenenfalls sogar vom ersten Vertragspartner A. Optional werden nur Bewertungsinformationen R vom Vermittler V und von jenen Vertragspartnern Bᵢ und Bₙ akzeptiert, an welche die Vertragspartneridentität 2 gesendet worden war.

Abhängig von einer Auswertung der Bewertungsinformationen R, wie sie oben unter Bezugnahme auf Fig. 1 beschrieben wurde, wird nun entweder Schritt (f1) oder (f2) durchlaufen. Im Schritt (f1) wird die in dem Gebot jenes Vertragspartners Bₙ, welcher zum Vertragsabschluß kam, angegebene Abschlußgebühr P empfangen und der Anteil uP daran an den Vermittler V gesandt. Mit 47 ist der Leistungsaustausch zwischen dem ersten Vertragspartner A und dem zweiten Vertragspartner Bₙ hinsichtlich des Vertragsgegenstandes dargestellt, welcher außerhalb des Verfahrens liegt.

Im alternativen Schritt (f2) wird der Transfer aller empfangenen Gebotsgebühren C rückabgewickelt, beginnend vom Vermittler V zum Ort S bzw. Betreiber X und von dort zu den einzelnen Vertragspartnern B₁, Bᵢ und Bₙ.

Die in Fig. 1 dargestellte Anlage und das in Fig. 4 veranschaulichte Verfahren können sowohl mittels hardware- als auch softwaretechnischer Maßnahmen realisiert bzw. implementiert werden. Die Gestaltung der entsprechenden Softwarekomponenten zur Implementierung der in Fig. 1 gezeigten Anlagenkomponenten bzw. der in Fig. 4 gezeigten Verfahrensschritte ist in der Technik bekannt.

Die Erfindung ist selbstverständlich nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zur Steuerung der Kommunikation zwischen zumindest einem ersten Vertragspartner (A) und potentiellen zweiten Vertragspartnern (Bᵢ) auf Grundlage von Drittinformation (1) eines Vermittlers (V), wobei die Drittinformation (1) zumindest die Identität (2) des ersten Vertragspartners und eine Beschreibung (3) des Vertragsgegenstandes umfaßt, mit den Schritten:
(a) Empfangen einer Drittinformation (1) und Speichern derselben,
(b) Zurverfügungstellen des Zuganges zur Vertragsgegenstandsbeschreibung (3) der Drittinformation (1) für eine Abfrage durch zweite Vertragspartner (Bᵢ),
(c) Empfangen von Geboten (19) von zweiten Vertragspartnern (Bᵢ) für den Zugang zur Vertragspartneridentität (2) der Drittinformation (1), wobei jedes Gebot (19) zumindest die Angabe (24) einer Abschlußgebühr (P) umfaßt, die vom jeweiligen zweiten Vertragspartner (Bᵢ) für einen Vertragsabschluß mit dem ersten Vertragspartner (A) geboten wird, Empfangen einer Gebotsgebühr (C) für jedes Gebot (19) von jedem gebotsabgebenden zweiten Vertragspartner (Bᵢ), und Speichern der Gebote (19) und Gebotsgebühren (C),
(d) Ermitteln der Gebote (19) mit den N höchsten Angaben (24) von Abschlußgebühren (P) zu einem vorgegebenen Zeitpunkt (t), wobei N ≥ 1 ist, Senden der Vertragspartneridentität (2) der Drittinformation (1) an die die N Gebote abgebenden zweiten Vertragspartner (Bᵢ), und Senden zumindest eines Anteiles (qΣC) aller Gebotsgebühren (C) an den Vermittler (V).

2. Verfahren nach Anspruch 1, **gekennzeichnet durch** die weiteren Schritte:
(e) Empfangen von Bewertungsinformationen (R) zu der Drittinformation (1) innerhalb einer vorgegebenen Zeitspanne (T), und,
(f1) wenn eine der Bewertungsinformationen (R) einen Vertragsabschluß zwischen dem ersten Vertragspartner (A) und einem der zweiten Vertragspartner (Bᵢ) anzeigt, Empfangen der in dem Gebot (19) dieses zweiten Vertragspartners (Bᵢ) angegebenen Abschlußgebühr (P) und Senden zumindest eines Anteils (uP) daran an den Vermittler (V), oder,
(f2) wenn keine der Bewertungsinformationen (R) einen Vertragsabschluß anzeigt, jedoch Bewertungsinformationen (R) von einer Mehrheit der die N Gebote (19) abgegeben habenden zweiten Vertragspartnern (Bᵢ) empfangen werden, Wiedererhalten der an den Vermittler (V) gesendeten Gebotsgebühren (qΣC) und Zurücksenden derselben an die zweiten Vertragspartner (Bᵢ).

3. Verfahren nach Anspruch 1 oder 2, **dadurch gekennzeichnet, daß** nur die Gebote (19) mit den M höchsten Angaben (25) von Gebotsgebühren (C) für die Ermittlung der genannten N Gebote zugelassen werden, wobei M > N ist.

4. Verfahren nach einem der Ansprüche 1 bis 3, **dadurch gekennzeichnet, daß** nur jene Gebote (19) für die Ermittlung der genannten N Gebote herangezogen werden, deren Gebotsgebühr (C) einen vorgegebenen Schwellwert übersteigt.

5. Verfahren nach einem der Ansprüche 1 bis 4, **dadurch gekennzeichnet, daß** für jeden Vermittler (V) eine Statistik (44') über seine Drittinformationen (1) und/oder die Bewertungsinformationen (R) zu allen seinen Drittinformationen (1) geführt und aktualisiert wird.

6. Verfahren nach Anspruch 5, **dadurch gekennzeichnet, daß** der genannte Anteil (qΣC) an den Gebotsgebühren (ΣC) und/oder der genannte Anteil (uP) an der Abschlußgebühr (P) abhängig von dieser Statistik (44') bestimmt wird.

7. Verfahren nach einem der Ansprüche 1 bis 6, **dadurch gekennzeichnet, daß** für jeden gebotsabgebenden zweiten Vertragspartner (Bᵢ) eine Statistik (44") über seine Gebote (19) und/oder seine Bewertungsinformationen (R) geführt und aktualisiert wird.

8. Verfahren nach Anspruch 7, **dadurch gekennzeichnet, daß** die Gebotsgebühr (C) anhand dieser Statistik (44") bestimmt, zusammen mit der Vertragsgegenstandsbeschreibung (3) zur Verfügung gestellt und bei einem Gebot (19) dieses zweiten Vertragspartners (Bᵢ) empfangen wird.

9. Verfahren nach einem der Ansprüche 1 bis 8, **dadurch gekennzeichnet, daß** die Gebotsgebühr (C) auch abhängig von einer Klassifizierung des zweiten Vertragspartners (Bᵢ) bestimmt wird.

10. Verfahren nach einem der Ansprüche 1 bis 7, **dadurch gekennzeichnet, daß** im Schritt (c) eine Angabe (25) über die Höhe der Gebotsgebühr (C) vom zweiten Vertragspartner (Bᵢ) empfangen wird.

11. Verfahren nach einem der Ansprüche 1 bis 10, **dadurch gekennzeichnet, daß** die genannten Zahl N zusammen mit der Vertragsgegenstandsbeschreibung (3) zur Abfrage zur Verfügung gestellt wird.

12. Verfahren nach einem der Ansprüche 1 bis 11, **dadurch gekennzeichnet, daß** die Drittinformation (1) eine Angabe (10) über die Informationsqualität, bevorzugt ihren Ursprung, enthält, welche zusammen mit der Vertragsgegenstandsbeschreibung (3) zur Abfrage zur Verfügung gestellt wird.

13. Verfahren nach einem der Ansprüche 1 bis 12, **dadurch gekennzeichnet, daß** die Vertragsgegenstandsbeschreibung (3) der Drittinformation (1) beim Speichern nach vorgegebenen Klassen von Vertragsgegenständen klassifiziert wird, bevorzugt mit Hilfe eines Expertensystems, welches den Vermittler (V) führt.

14. Verfahren nach Anspruch 13, **dadurch gekennzeichnet, daß** die Gebotsgebühr (C) auch abhängig von der genannten Klasse der Vertragsgegenstandsbeschreibung (3) bestimmt wird.

15. Verfahren nach einem der Ansprüche 1 bis 14, **dadurch gekennzeichnet, daß** der Zugang zur Vertragsgegenstandsbeschreibung (3) für einen bestimmten zweiten Vertragspartner (Bᵢ) nur abhängig von einer Klassifizierung dieses zweiten Vertragspartners (B₁) zugelassen wird.

16. Verfahren nach einem der Ansprüche 1 bis 15, **dadurch gekennzeichnet, daß** das Empfangen von Geboten (19) eines bestimmten zweiten Vertragspartners (Bᵢ) nur abhängig von einer Klassifizierung dieses zweiten Vertragspartners (Bᵢ) zugelassen wird.

17. Anlage zur Steuerung der Kommunikation zwischen zumindest einem ersten Vertragspartner (A) und potentiellen zweiten Vertragspartnern (Bᵢ) auf Grundlage von Drittinformation (1) eines Vermittlers (V), wobei die Drittinformation (1) zumindest die Identität (2) des ersten Vertragspartners (A) und eine Beschreibung (3) des Vertragsgegenstandes umfaßt, mit:
einer ersten Datenbank (4) mit einer Einspeiseschnittstelle (5) für den Vermittler (V) zur Aufnahme von Drittinformation (1), wobei die erste Datenbank (4) einen privaten Abschnitt (6) und einen öffentlichen Abschnitt (7) aufweist und im privaten Abschnitt (4) zumindest die Identität (2) des ersten Vertragspartners (A) und im öffentlichen Abschnitt (7) zumindest die Beschreibung (3) des Vertragsgegenstandes speichert, und ferner mit einer Abfrageschnittstelle (14) zur Abfrage des öffentlichen Abschnittes (7) durch potentielle zweite Vertragspartner (Bᵢ),
einer Kontoführungsvorrichtung (34) zur Führung von Guthabenkonten (35) für jeden eine Drittinformation (1) einspeisenden Vermittler (V),
einer zweiten Datenbank (17) mit einer Einspeiseschnittstelle (18) für die zweiten Vertragspartner (Bᵢ) zur Aufnahme von Geboten (19) für den Zugang zum privaten Abschnitt (7) der ersten Datenbank (4) hinsichtlich einer bestimmten Drittinformation (1), wobei jedes Gebot (19) zumindest die Angabe (24) einer Abschlußgebühr (P) enthält, die vom jeweiligen zweiten Vertragspartner (Bᵢ) für einen Vertragsabschluß mit dem ersten Vertragspartner (A) geboten wird, und wobei jedem Gebot (19) eine vorgebbare Gebotsgebühr (C) zugeordnet ist,
einer Kontoführungsvorrichtung (26) zur Führung von Guthabenkonten (27) für jeden ein Gebot (19) einspeisenden zweiten Vertragspartner (Bᵢ),
einem Sammelspeicher (28) zur Sammlung von Gebotsgebühren (C), wobei jedes Einspeisen eines Gebotes (19) in die zweite Datenbank (17) den Transfer der zugeordneten Gebotsgebühr (C) vom Guthabenkonto (27) des einspeisenden zweiten Vertragspartners (Bᵢ) zum Sammelspeicher (28) auslöst, und
einer Auktionsvorrichtung (29), die zu einem vorgegebenen Zeitpunkt (t) die Gebote (19) mit den N höchsten Angaben (24) von Abschlußgebühren (P) aus der zweiten Datenbank (17) ermittelt, wobei N ≥ 1, für jeden eines dieser N Gebote (19) eingespeist habenden zweiten Vertragspartner (Bᵢ) den Zugang zum privaten Abschnitt (7) der ersten Datenbank (4) für die von diesem Gebot (19) betroffene Drittinformation (1) freischaltet, und den Transfer eines vorgebbaren Anteils (qΣC) aller im Sammelspeicher (28) gesammelter Gebotsgebühren (ΣC) zum Guthabenkonto (35) des die betroffene Drittinformation (1) eingespeist habenden Vermittlers (V) auslöst.

18. Anlage nach Anspruch 17, **dadurch gekennzeichnet, daß** eine Auswertevorrichtung (38) mit zumindest einer Eingangsschnittstelle (39, 40) für den Empfang von Bewertungsinformationen (R) vorgesehen ist, welche Auswertevorrichtung (38) den Empfang von Bewertungsinformationen (R) zu der Drittinformation (1) innerhalb einer vorgegebenen Zeitspanne (T) freigibt und, wenn eine der Bewertungsinformationen (R) einen Vertragsabschluß zwischen dem ersten Vertragspartner (A) und einem der zweiten Vertragspartner (Bᵢ) anzeigt, den Transfer zumindest eines Anteils (uP) der in dem Gebot (19) dieses zweiten Vertragspartners (Bᵢ) angegebenen Abschlußgebühr (P) von dessen Guthabenkonto (27) auf das Guthabenkonto (35) des Vermittlers (V) auslöst, oder, wenn keine der Bewertungsinformationen (R) einen Vertragsabschluß anzeigt, jedoch Bewertungsinformationen (R) von einer Mehrheit der die N Gebote (19) abgegeben habenden zweiten Vertragspartnern (Bᵢ) vorliegen, den Rücktransfer der Gebotsgebühren (qΣC) vom Guthabenkonto (35) des Vermittlers (V) auf die Guthabenkonten (27) der zweiten Vertragspartner (Bᵢ) auslöst.

19. Anlage nach Anspruch 17 oder 18, **dadurch gekennzeichnet, daß** die Auktionsvorrichtung (29) die genannten N Gebote (19) nur unter jenen Geboten (19) mit den M höchsten Angaben (25) von Gebotsgebühren (C) ermittelt, mit M > N.

20. Anlage nach einem der Ansprüche 17 bis 19, **dadurch gekennzeichnet, daß** die Auktionsvorrichtung (29) die genannten N Gebote (19) nur unter jenen Geboten (19) ermittelt, deren Gebotsgebühr (C) einen vorgegebenen Schwellwert übersteigt.

21. Anlage nach einem der Ansprüche 17 bis 20, **dadurch gekennzeichnet, daß** eine Statistikdatenbank (43) vorgesehen ist, welche an die Auswertevorrichtung (38) angeschlossen ist und für jeden Vermittler (V) eine Statistik (44') über seine Drittinformationen (1) und/oder die Bewertungsinformationen (R) zu allen seinen Drittinformationen (1) speichert und aktualisiert.

22. Anlage nach Anspruch 21, **dadurch gekennzeichnet, daß** die Statistikdatenbank (43) die Höhe des genannten Anteils (qΣC) an den Gebotsgebühren (ΣC) und/oder die Höhe des genannten Anteils (uP) an der Abschlußgebühr (P) steuert.

23. Anlage nach einem der Ansprüche 17 bis 22, **dadurch gekennzeichnet, daß** eine Statistikdatenbank (43) vorgesehen ist, welche an die Auswertevorrichtung (38) angeschlossen ist und für jeden gebotsabgebenden zweiten Vertragspartner (Bᵢ) eine Statistik (44") über seine Gebote (19) und/oder seine Bewertungsinformationen (R) speichert und aktualisiert.

24. Anlage nach Anspruch 23, **dadurch gekennzeichnet, daß** die Statistikdatenbank (43) die Höhe der Gebotsgebühr (C) für einen bestimmten zweiten Vertragspartner (Bᵢ) festlegt.

25. Anlage nach einem der Ansprüche 17 bis 24, **dadurch gekennzeichnet, daß** die Höhe der Gebotsgebühr (C) auch abhängig von einer Klassifizierung des die erste Datenbank (4) abfragenden zweiten Vertragspartners (B₁) festlegt wird.

26. Anlage nach einem der Ansprüche 17 bis 23, **dadurch gekennzeichnet, daß** die Einspeiseschnittstelle (18) der zweiten Datenbank (17) eine Angabe (25) über die Höhe der Gebotsgebühr (C) vom zweiten Vertragspartner (Bᵢ) empfängt.

27. Anlage nach einem der Ansprüche 17 bis 26, **dadurch gekennzeichnet, daß** die Abfrageschnittstelle (14) der ersten Datenbank (4) die genannte Zahl N zusammen mit der Vertragsgegenstandsbeschreibung (3) zur Abfrage zur Verfügung stellt.

28. Anlage nach einem der Ansprüche 17 bis 27, **dadurch gekennzeichnet, daß** die Drittinformation (1) eine Angabe (10) über die Informationsqualität, bevorzugt ihren Ursprung, enthält.

29. Anlage nach einem der Ansprüche 17 bis 28, **dadurch gekennzeichnet, daß** die Einspeiseschnittstelle (5) der ersten Datenbank (4) die Vertragsgegenstandsbeschreibung (3) der Drittinformation (1) nach vorgegebenen Klassen von Vertragsgegenständen klassifiziert, bevorzugt mit Hilfe eines Expertensystems, welches den Vermittler (V) führt.

30. Anlage nach Anspruch 29, **dadurch gekennzeichnet, daß** die Höhe der Gebotsgebühr (C) auch abhängig von der genannten Klasse der Vertragsgegenstandsbeschreibung (3) festlegt wird.

31. Anlage nach einem der Ansprüche 17 bis 30, **dadurch gekennzeichnet, daß** die Einspeiseschnittstelle (18) der zweiten Datenbank (17) Gebote (19) eines zweiten Vertragspartners (Bᵢ) nur abhängig von der Identität oder einer Klassifizierung dieses zweiten Vertragspartners (Bᵢ) entgegennimmt.

32. Anlage nach einem der Ansprüche 17 bis 31, **dadurch gekennzeichnet, daß** die Abfrageschnittstelle (14) der ersten Datenbank (4) die Abfrage des öffentlichen Abschnittes (7) nur abhängig von einer Klassifizierung des abfragenden zweiten Vertragspartners (Bᵢ) gestattet.

33. Computerprogrammprodukt, implementierend ein Verfahren nach einem der Ansprüche 1 bis 16.

34. Computerprogrammprodukt, gespeichert auf einem computerlesbaren Datenträger, implementierend eine Anlage nach einem der Ansprüche 17 bis 32.
